# EUROPÄISCHE PATENTSCHRIFT

(11) **EP 1 724 325 B1**
(45) Veröffentlichungstag und Bekanntmachung des Hinweises auf die Patenterteilung: **15.11.2017**
(21) Anmeldenummer: 06010216.7
(22) Anmeldetag: 18.05.2006
(51) Int. Cl.: C10G 1/00, C10G 1/08, C10G 3/00, C10G 11/02, C11B 3/02, C11B 1/12

(54) **Verfahren zur kontinuierlichen oder teilkontinuierlichen Konvertierung von fett-oder ölhaltigen Roh- und Abfallstoffen in Gemische mit hohem Kohlenwasserstoffanteil**
Process for continuous or partly continuous conversion of fat- or oil-containing raw and waste materials into mixtures having a high hydrocarbon content
Procédé pour la conversion en continu ou partiellement en continu de matières premières ou de déchets contenant des graisses ou des huiles en des mélanges avec taux élevé d'hydrocarbures

(30) Priorität: 18.05.2005 DE 102005023601
(43) Veröffentlichungstag der Anmeldung: 22.11.2006
(73) Patentinhaber: Fraunhofer-Gesellschaft zur Förderung der angewandten Forschung e.V., 80686 München (DE)
(72) Erfinder: Heil, Volker, 46145 Oberhausen (DE); Jelen, Erich, 46459 Rees-Bienen (DE); Keldenich, Kai, 45134 Essen (DE); Unger, Christoph, 46485 Wesel (DE)

(56) Entgegenhaltungen:
- DE-A1- 10 327 059
- US-A- 1 991 955
- US-A- 2 105 478
- US-A- 4 102 938

## Beschreibung

Die Erfindung betrifft ein Verfahren zur kontinuierlichen oder teilkontinuierlichen Umwandlung von Abfallfetten/-ölen in Gemische mit hohem Kohlenwasserstoffanteil, die als Wertstoffe, z.B. Brenn- oder Kraftstoffe nutzbar sind. Das Verfahren stellt damit nicht nur die Nutzbarmachung von Altmaterialien zur Verfügung, sondern vermeidet auch, dass diese kostspielig beseitigt werden müssen.

Es besteht ein großer Bedarf an der Bereitstellung neuer, einfacher Verfahren, die zu unproblematisch weiterverarbeitbaren oder direkt nutzbaren Produkten aus bereits vorhandenen Fetten und/oder Ölen führen und z.B. den kalorischen Gehalt der Fette bzw. Öle nicht verloren gehen lassen.

Die US 1,991,955 offenbart ein Verfahren zur katalytischen Spaltung von höheren Fettsäuren oder Fettsäureestern in Gegenwart von Ammoniak oder Alkylaminen. Als Katalysator wird hierbei ein dehydratisierender Katalysator, nämlich Aktivkohle, deren Oberfläche mit einem Metalloxid beschichtet ist, angegeben.

Die US 1,960,951 beschreibt ein Verfahren zum katalytischen Umwandeln von pflanzlichen Ölen u.a. zur Gewinnung flüchtigerer Produkte. Als Katalysator wird Aktivkohle eingesetzt. In diesem Verfahren wird das umzuwandelnde Öl mit Hilfe eines Luftdruck-Kompressors unter Druck gesetzt; unter Druck erfolgt der Durchtritt durch das erhitzte Aktivkohle-Bett. Dabei erfolgt eine Art "Cracken", zumindest im Falle von pflanzlichen Ölen wie Erdnussöl.

Die DE 103 27 059 A1 beschreibt ein gattungsgemäßes Verfahren, bei dem ein fett- oder ölhaltiges oder fettsäurehaltiges Ausgangsmaterial bei einer Temperatur von 150-850 °C in Abwesenheit von Sauerstoff in einem Reaktor mit einem Aktivkohle-Festbett in Kontakt gebracht werden. Dabei werden die Fette gespalten und die Fettsäuren decarboxyliert und zu kürzerkettigen Kohlenwasserstoffen abgebaut.

Nachteilig an diesen Verfahren ist, dass sie nur mit großem Aufwand kontinuierlich durchführbar sind.

Der vorliegenden Erfindung liegt daher die Aufgabe zugrunde, die Nachteile des Standes der Technik zu überwinden und ein wirtschaftlicheres kontinuierliches Verfahren anzugeben, mit dem sich Alt- oder Rohmaterialien mit hohem Fett- und/oder Ölgehalt in ein Produkt mit hohem Kohlenwasserstoffgehalt umwandeln lassen.

Diese Aufgabe wird durch das Verfahren nach Anspruch 1 gelöst. Unteransprüche lehren vorteilhafte Weiterbildungen. Erfindungsgemäß wird ein fett- und/oder ölhaltiges und/oder fettsäurehaltiges, vorzugsweise im Wesentlichen aus Fett bzw. Öl bestehendes Ausgangsmaterial bei einer Temperatur von 150-850 °C, in Abwesenheit von Sauerstoff und in Gegenwart von Wasser und/oder einem Wasser freisetzenden Material in einem Konvertierungsreaktor, der Aktivkohle enthält, mit Aktivkohle in Kontakt gebracht, so dass ein kohlenwasserstoffhaltiges Produktgasgemisch entsteht. Es wird dabei ein Reaktor gewählt, der eine kontinuierliche oder teilkontinuierliche Prozessführung zulässt.

Dabei werden die Fette gespalten und die Fettsäuren decarboxyliert und zu kürzerkettigen Kohlenwasserstoffen abgebaut. Der Produktgasstrom (er enthält in der Regel Kohlenwasserstoffe, Kohlenmonoxid, Kohlendioxid, Wasserstoff und Inertgas und je nach Ausgangsmaterial ggf. weitere Komponenten) wird, soweit sinnvoll, zur Kondensation gebracht und gegebenenfalls in die gewünschte Produktpalette aufgetrennt; leichtflüchtige Komponenten können nach Abtrennen der übrigen Bestandteile zur Beheizung des Reaktors energetisch genutzt werden, so dass die Reaktion im Regelbetrieb energieautark verläuft. Außerdem kann zusätzlich oder alternativ der nicht brennbare Anteil (CO₂, N₂) des Produktgasstroms zur weiteren Inertisierung des Reaktors zurückgeführt werden. Das mit dem erfindungsgemäßen Verfahren erhaltene Produktgemisch ist im wesentlichen ein Kohlenwasserstoffgemisch, das sowohl als regenerativer Kraftstoff (beispielsweise "Bio-Flugbenzin") als auch nach entsprechender Auftrennung als Chemiegrundstoff (Basischemikalien, Lösungsmittel) oder in anderen Bereichen der chemischen Industrie Verwendung finden kann. Es kann dabei gegebenenfalls auch in zeitlicher oder räumlicher Nähe zu seiner Herstellung direkt weiterverwendet werden, beispielsweise durch die Anordnung des Konvertierungsreaktors in Kombination mit einer Verbrennungsmaschine für die Erzeugung von Energie (z.B. in Fahrzeugmotoren).

Überraschenderweise hat sich gezeigt, dass erst durch den Zusatz von Wasser oder (bei den Bedingungen, die im Konvertierungsreaktor herrschen) Wasser freisetzenden Materialien ein kontinuierlicher Betrieb des Verfahrens möglich ist. Erfindungsgemäß wurde erkannt, dass bei diskontinuierlichen Betriebsweisen sowie beim Einfahren von kontinuierlichen Vorgängen üblicherweise kein Zusatz von Wasser erforderlich ist; vermutlich steht (je nach Vorbehandlung) eine gewisse Wassermenge in der Aktivkohle gebunden zur Verfügung. Für kontinuierliche Betriebsweisen ist aber der Zusatz von Wasser erforderlich.

Der Zusatz von Wasser hat den Vorteil, dass auch bei kontinuierlichen Verfahren der Umsatz - und damit die Ausbeute an Produktgasen - konstant bleibt. Wird nicht ausreichend Wasser zugesetzt, so kann es ggf. sogar zu Verkokungsvorgängen kommen. Hierbei können mangels Wasserangebot nicht hydrolysierbare Triglyceride verkoken, also unter Abscheidung von Gasen elementaren Kohlenstoff freisetzen, welcher sich auf der äußeren und inneren Katalysatoroberfläche abscheidet und dort zur Alterung und Inaktivierung des Katalysators führen kann. Das erfindungsgemäße Verfahren besitzt daher auch den Vorteil, dass nur eine verzögerte Katalysatoralterung erfolgt.

Wird das Wasser dampfförmig in den Konvertierungsreaktors eingeleitet, so hat dies den zusätzlichen Vorteil, dass dieser gleichzeitig zur Beheizung des Konvertierungsreaktors beitragen kann, was besonders vorteilhaft für die Einbindung in Anlagenverbünde ist, da hier Dampf aus anderen Anlagen effizient verwendet werden kann. Das erfindungsgemäße Verfahren wird so durchgeführt, dass bezogen auf die zu konvertierenden Ausgangsmaterialien mindestens 2 Moläquivalente Wasser (in freier Form oder in Form von Wasser freisetzenden Stoffen) zugegen sind. Dabei wird besonders bevorzugt entweder eine Menge von 10 Moläquivalenten Wasser (bezogen auf die zu konvertierenden Ausgangsmaterialien) nicht überschritten oder maximal eine Wassermenge eingesetzt, deren Volumen das 0,4fache Volumen des (wasserfrei gerechneten) Inertgasstromes nicht übersteigt (Bezugsbedingung für die temperaturabhängigen Volumenströme ist wiederum die Reaktionstemperatur).
Falls - wie unten beschrieben - zusätzlich Wasser als Reaktionspartner für Shiftreaktionen mit CO verbraucht wird, erhöht sich die vorstehend genannte bevorzugte bzw. besonders bevorzugte maximal einzusetzende Wassermenge um die entsprechende Menge.

Der Zusatz von Wasser kann beispielsweise durch Einleiten eines Wasser- oder Dampfstromes in den Reaktionsraum, in dem sich die Aktivkohle befindet, durch Zugabe von Wasser oder Dampf zum Ausgangsstoff der Reaktion oder durch Zugabe von Wasser oder Dampf zum Inertgasstrom geschehen. Statt Wasser können auch wasserhaltige Stoffströme eingesetzt werden sowie Stoffe, die unter den genannten Reaktionsbedingungen Wasser abspalten oder freisetzen. Denkbar ist beispielsweise, Stoffe zuzusetzen, die zunächst Wasser abspalten und sodann mittels der Aktivkohle zu Kohlenwasserstoffen umgewandelt werden (z.B. organische Verbindungen mit einem hohen Anteil an vicinalen OH-Gruppen wie z.B. Glycerin).
Ganz allgemein ist erfindungsgemäß unter einem Wasser freisetzenden Material ein Stoff oder ein Stoffgemisch zu verstehen, das entweder gebundenes Wasser enthält, das unter geeigneten Bedingungen (z.B. durch erhöhte Temperaturen) freigesetzt wird, oder bei dem mittels einer chemischen Reaktion (die z.B. durch erhöhte Temperaturen ausgelöst wird), z.B. einer Kondensationsreaktion, Wasser gebildet wird.

Um eine kontinuierliche Anlagenausnutzung mit möglichst gleichbleibenden Ausgangsstoffzusammensetzungen zu erzielen, kann es beispielsweise vorteilhaft sein, Gemische aus Fetten/Ölen und Glycerin beziehungsweise glycerinhaltigen Substanzen (z. B. Glycerinwasser aus der Biodieselherstellung) als wasserhaltiges bzw. Wasser freisetzendes Gemisch einzusetzen. Dass der Glycerinstrom gewisse Wasseranteile enthalten darf, da Wasser in der Reaktorgasphase erwünscht ist, ist hier aus Sicht der Glycerinverwertung besonders vorteilhaft. Dies begrenzt die Aufbereitungskosten des Glycerins deutlich, da gerade die Abtrennung der letzten Wasseranteile sehr kostenaufwendig ist.

Als wasserhaltiges Gemisch können auch basische Reststofflösungen oder Gemische eingesetzt werden. Durch den Zusatz basischer Komponenten wird die Fettspaltung begünstigt. Durch Komponenten, die eine Hydroxyl-Gruppe besitzen wie z.B. NaOH, KOH oder Alkohole findet eine basische Hydrolyse (Verseifung) der Fette statt. Im Sinne dieser Erfindung wird daher unter einer basischen Komponente insbesondere jede chemische Verbindung oder jedes Gemisch verstanden, mit der auch ohne Zusatz eines Katalysators die Verseifung oder Umesterung von Fetten möglich ist.

Vorteilhaft ist daher auch der Zusatz von nicht in Form einer Lösung oder als Flüssigkeit vorliegenden basischen Komponenten sowie die Verwendung basischer oder basisch funktionalisierter Aktivkohlen. Dies kann z.B. durch das Tränken des Katalysators mit (bei der maximalen Betriebstemperatur des erfindungsgemäßen Verfahrens) nicht verdampfenden basischen Komponenten wie NaOH oder KOH und nachfolgendes Trocknen (vor Einsatz in den Reaktor oder vor Beginn der Konvertierungsreaktion) geschehen. Aufgrund ihres hohen Siedepunkts wird ein Verdampfen der basischen Komponenten verhindert.

Des Weiteren kann die Zugabe von basischen Komponenten, die eine Hydroxyl-Gruppe aufweisen und bei den Reaktionsbedingungen gasförmig vorliegen (z. B. Alkoholen) vorteilhaft sein. Diese können auch aus der Gasphase heraus an die innere Katalysatoroberfläche gelangen und dort mit den eingesetzten Fetten reagieren.
Die Zuführung der hydroxylgruppenhaltigen basischen Komponenten in den Konvertierungsreaktor kann mit jedem beliebigen Stoffstrom (Fette, Inertgasstrom) oder auch mit einer separaten Zuführung geschehen. Ggf. kann auch eine Imprägnierung der Aktivkohle mit diesen Stoffen sinnvoll sein, um gleich zu Beginn der Reaktion bereits eine gute Umsetzung zu erlangen. Die gasförmigen hydroxylgruppenhaltigen basischen Komponenten werden allerdings verdampfen, so dass sie ständig nachgeführt werden müssen.

Das erfindungsgemäße kontinuierliche oder teilkontinuierliche Verfahren hat weiterhin den Vorteil, dass eine ökonomischere Verfahrensführung möglich ist. Bei der "kontinuierlichen" Durchführung eines Verfahrens, wie es in der DE 103 27 059 A1 beschrieben ist, mit der Einschränkung auf ein Festbett als Reaktor ist eine kontinuierliche Reaktionsführung bezüglich der zu konvertierenden Einsatzstoffe durch die Standzeit des Katalysators beschränkt, sofern nicht auf ein zyklisch betriebenes Mehrkammersystem zurückgegriffen wird. Letzteres ist aber sehr aufwendig, da im vorliegenden Fall ein thermisch-katalytischer Reaktor verwendet wird und da für jeden Katalysatortauschzyklus sowohl die Temperatur als auch die Inertisierung in der entsprechenden Reaktionskammer zunächst ab - und schließlich wieder aufgebaut werden müssen.

Das entsorgungstechnische Anwendungsgebiet des erfindungsgemäßen Verfahrens liegt in der Konvertierung von Fetten und Ölen, insbesondere Alt- und Gebrauchtfetten, sowie künstlich erzeugten oder modifizierten Fetten und artverwandten Stoffen (wie Abscheiderinhalten, Rückständen aus Schlachthöfen oder Tierkörperbeseitigungsanstalten) zu einem Wertstoff.
Das produktionsorientierte Anwendungsgebiet liegt darin begründet, dass es sich bei diesem Wertstoff um Kohlenwasserstoffgemische handelt, die sowohl als regenerative Kraftstoffe (beispielsweise als "Bio-Flugbenzin" oder "Bio-Dieselkraftstoff") als auch nach entsprechender Auftrennung als Chemiegrundstoffe (Basischemikalien, Lösemittel) Verwendung finden können.

Mit der vorliegenden Erfindung können also einerseits große Mengen Abfallfette einer hocheffizienten stofflichen Verwertung und gegebenenfalls auch einer thermischen Nutzung zugeführt werden. Andererseits werden "erneuerbare" Kraftstoffe erhalten, d.h. das erfindungsgemäße Verfahren stellt einen Weg dar, mit dem der Anteil regenerativer Energieträger erhöht werden kann.

Als Einsatzstoff kommen biogene und/oder künstlich erzeugte ("anthropogene") Fette und Öle (insbesondere Altfette und -öle) und Fettsäuren sowie artverwandte Stoffe, insbesondere Alt- und Gebrauchtfette sowie native, künstlich erzeugte oder modifizierte Fette wie auch fett- oder kohlenwasserstoffhaltige Abscheiderinhalte aus industriellen, kommunalen und gewerblichen Abscheidern, Rückstände aus Schlachthöfen oder Tierkörperbeseitigungsanstalten, darunter auch z.B. gebrauchte natürliche oder künstliche Frittierfette und dgl., in Frage. Gebrauchte Speisefette können naturgemäß abhängig von ihrer Verwendung feste Rückstände aufweisen. Kommerzielle Fettsammler führen vor einer Weitergabe in der Regel eine mechanische Reinigung (Filtration) durch. Um sicher zu stellen, dass möglicherweise trotzdem noch vorhandene Partikel nicht zu einer Verstopfung der Einspeisevorrichtung führen, ist es empfehlenswert, das Ausgangsmaterial vor der Konvertierung durch eine mechanische Reinigung von festen Fremdbestandteilen zu befreien, was beispielsweise am Einfüllstutzen des Reaktors erfolgen kann, in dem die Konvertierung erfolgen soll.
Besonders bevorzugt werden erfindungsgemäß Ausgangsmaterialien eingesetzt, die mindestens 65 Gew.-% Triglyceride enthalten.

Als Ausgangsmaterialien sind auch Reststoffe geeignet, die neben Fetten und/oder Fettsäuren und/oder Ölen auch (andere) Substanzen mit Carbonyl- und/oder Carboxylgruppen und/oder von der chemischen Reaktivität hierzu ähnliche Substanzen enthalten. Hier sind insbesondere Ester, Ester-bruchstücke, Phenole, Polyphenole, Polyole und Ether zu nennen. Ist im Reaktionsraum neben Wasser auch eine erhöhte CO-Konzentration vorhanden, so kann das CO mit Wasser im Überschuss in der CO-Shift-Reaktion zu CO2 und Wasserstoff reagieren. Durch den hierbei entstehenden Wasserstoff kann die Hydrierung dieser Stoffe zu Kohlenwasserstoffen erfolgen.

Als Konvertierungsreaktor (Reaktor) kann ein beliebiger, in geeigneter Weise heizbarer Ofen, der einen kontinuierlichen oder teilkontinuierlichen Betrieb zulässt, eingesetzt werden. Unter einem kontinuierlichen bzw. teilkontinuierlichem Betrieb ist hierbei zu verstehen, dass die Zufuhr an Ausgangsmaterialien kontinuierlich oder teilkontinuierlich erfolgt. Hinsichtlich eines derartigen kontinuierlich oder teilkontinuierlich betreibbaren Reaktors lassen sich neben Festbettreaktoren jeglicher Bauart insbesondere Wanderbetten, stationäre und zirkulierende Wirbelschichtreaktoren (inklusive Strahlmischer), Drehrostgeneratoren, Schachtöfen, Etagenöfen oder Drehrohrreaktoren einsetzen. Diese ermöglichen ein kontinuierliches oder batchweises Austauschen des Katalysators während des Reaktorbetriebes, also ohne Herunterkühlen. Dies ist vorteilhaft, da auch die erfindungsgemäßen stofflichen Reaktionszusätze die Katalysatorstandzeiten nur verlängern, nicht aber ins Unendliche ausdehnen können. Diese Maßnahmen steigern nicht nur die Energieeffizienz und die erzielbaren jährlichen Betriebsstunden, sondern erhöht auch die Reaktorstandzeit.

Die Aktivkohle kann im Reaktor in beliebiger Weise so angeordnet sein, dass das die zu konvertierenden Stoffe enthaltende Gas sie durch- oder überstreichen. Die zu konvertierenden Stoffe werden meist in flüssiger, gasförmiger oder dampfförmiger Gestalt in den Konvertierungsreaktor eingebracht werden. Hierfür können sie bereits vor Einleiten in den Reaktor oder aber auch erst in diesem vor dem Kontakt mit der Aktivkohle teilweise vorgewärmt oder bereits auf die Umsetzungstemperatur gebracht werden. Alternativ können sie, sofern sie flüssig sind, auch kalt auf die die erforderliche Umsetzungstemperatur aufweisende Aktivkohle aufgebracht bzw. in den Reaktor eingebracht werden. Der Kontakt mit der Aktivkohle kann auf eine beliebige, geeignete Weise erfolgen, beispielsweise durch Aufsprühen von flüssigem, kaltem oder erhitztem Ausgangsmaterial oder dadurch, dass ein Gasstrom mit gasförmigen oder dampfförmigen Ausgangssubstanzen durch das Bett geleitet wird. In manchen Fällen wird man aber auch das feste Fett direkt auf die erhitzte Aktivkohle bzw. in den Reaktor geben können.

Zur Inertisierung des Reaktorraums sollte dieser vorab mit einem Inertgas wie Stickstoff gespült sein. Werden die zu konvertierenden Stoffe bereits gasförmig in den Reaktor eingebracht, bietet es sich an, sie in einem Gasstrom aus Inertgas aufzunehmen und mit diesem in den Reaktor zu überführen. Stattdessen kann das Inertgas auch getrennt in den Reaktor geleitet werden. Die Inertisierung des Reaktorraums ist notwendig, da ansonsten bei hohen Temperaturen die Kohle verbrennen würde. Außerdem zersetzen sich Fette an Luft bei entsprechend hohen Temperaturen unter Bildung von Acrolein (Abbauprodukt des Glycerins) und eines kohleartigen Rückstandes, statt sich wie gewünscht in Kohlenwasserstoffe und dgl. wie oben genannt umzusetzen.
Unter einem Inertgas im Sinne dieser Erfindung ist also ein »Inertisierungsgas« zu verstehen bzw. ein Gas zur Verdrängung von Sauerstoff, der zu einem sofortigen Abbrand von Produkten und Ausgangsstoffen führen würde und daher schon aus sicherheitstechnischen Gründen aus dem Reaktionssystem ferngehalten werden muss. Hierbei ist unbenommen, dass dieses Gas je nach Zusammensetzung beispielsweise mit der Aktivkohle durchaus reagieren kann.

Bevorzugt wird das erfindungsgemäße Verfahren bei einem Druck zwischen 0,2 und 2,0 bar abs., besonders bevorzugt zwischen 0,5 und 1,5 bar abs., durchgeführt. Generell ist eine gewisse Druckdifferenz vorteilhaft, um die Strömungswiderstände im Reaktor zu überwinden, und aus sicherheitstechnischen Gründen ist entweder mindestens leichter Über- oder Unterdruck sinnvoll.

Unter der katalytischen Wirkung der Aktivkohle werden die Fette ab etwa 150 °C bis 280 °C in inerter Atmosphäre gespalten; die Fettsäuren werden decarboxyliert und zu kürzerkettigen Kohlenwasserstoffen abgebaut.

Der vorstehend angegebene Aktivierungstemperaturbereich erstreckt sich über einen relativ großen Bereich, weil er von der tatsächlich eingesetzten Aktivkohle abhängt. In ganz speziellen Fällen kann die Aktivierungstemperatur auch außerhalb dieses Bereichs liegen. Diverse Aktivkohlen unterscheiden sich sehr in Bezug auf die Initialtemperaturen, bei denen der Beginn der Konvertierungsreaktion beobachtet werden kann. Aktivkohlen können aus Holz-, Braun- und Steinkohle, aber auch aus Fruchtkernen oder -schalen (z.B. Olive, Kokos), Torf oder künstlich erzeugten Polymeren wie gebrauchten Ionenaustauscherharzen oder dgl. gewonnen werden. Sowohl die Herkunft als auch die Aufbereitung und Aktivierung (Pyrolyse, Wasserdampf- oder Chemikalien-Aktivierung, Art des eingesetzten Bindemittels, Art der Vermahlung, Compoundierung), ja sogar die eingesetzte Menge trägt zu spezifischen Eigenschaften der verschiedenen Aktivkohlen bei.

Dementsprechend hängt natürlich die optimale Temperatur für die innerhalb des weiter oben genannten Temperaturspektrums ablaufenden Reaktionen ebenfalls von der Natur der gewählten Aktivkohle ab.
Durch die Wahl der konkreten Temperatur kann auch auf das Produktspektrum Einfluss genommen werden. Niedrigere Temperaturen führen allgemein zu einer niedrigeren Ausbeute an Kohlenwasserstoffen und liefern relativ viel Kohlenmonoxid und Kohlendioxid, das aus den Decarboxylierungsreaktionen stammen dürfte. Außerdem entsteht bei niedrigeren Temperaturen relativ viel Propen, bezogen auf die anderen bei Raumtemperatur gasförmigen Kohlenwasserstoffe, was auf eine Abspaltung von Glycerin aus den Fetten und dessen Umwandlung in seine Folgeprodukte Acrolein und Propen hindeutet, während der Propenanteil bei höheren Temperaturen zugunsten von C₁-C₄-Alkanen relativ absinkt. Weiterhin kann man bei höheren Temperaturen einen starken Abfall (auf ca. 50%) des Anteils der C₁₅- und der C₁₇-Fraktion (Decarboxylierungsprodukte von Palmitin- und Stearinsäure) zugunsten niedrigerer Kohlenwasserstoffe sowie die Bildung von mehr Wasserstoff beobachten. Bemerkenswert ist, dass die Kohle erst nach einer Anlaufphase ihre optimale Aktivität erreicht.

Wird neben Wasser bzw. wasserabspaltenden Substanzen auch eine erhöhte CO-Konzentrationen in den dem Reaktionsraum zugeleiteten Stoffströmen zugelassen, so kann das CO mit vorhandenem Wasser in der CO-Shift-Reaktion zu CO₂ und Wasserstoff reagieren:

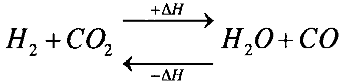

Vorteilhafterweise wird diese Shiftreaktion bei Anwesenheit von (ggf. geträgertem) CuO, ZnO oder kommerziell erhältlichen Shiftreaktions-Katalysatoren bei Temperaturen unter 350 °C betrieben. Besonders vorteilhaft ist es, diese Reaktion vor Eintritt in den Reaktor (beispielsweise in einem vorgelagerten Shiftreaktor) oder innerhalb des Reaktors vor Kontaktieren des Aktivkohlekatalysators (beispielsweise in einer vorgelagerten Reaktionszone mit eigener Temperaturregelung) durchzuführen.
Der bei dieser CO-Shift-Reaktion entstehende Wasserstoff kann beispielsweise die Hydrierung des intermediär entstehenden Acroleins zu Propen fördern; auch andere Carbonyl- oder Phenolgruppen enthaltende Verbindungen können so zu Kohlenwasserstoffen hydriert werden. Diese Hydrierung wird durch Katalysatoren begünstigt. Als Katalysator kann auch die im Reaktor vorliegende Aktivkohle fungieren. Eine Steigerung der katalytischen Aktivität lässt sich mit Hilfe von Edelmetallkatalysatoren, insbesondere Platin, erreichen. Diese werden vorteilhafterweise auf Aktivkohle dotiert vorgelegt. Das durch diesen Prozess erhaltene Propen kann optional aus dem Produktgasstrom abgetrennt und als Grundchemikalie für weitere Reformierungsschritte eingesetzt werden.
Ist statt Propen Acrolein als abzutrennender Wertstoff gewünscht, so kann dieses durch Inhibierung der oben beschriebenen Hydrierungsreaktion erzielt werden. Hierzu können beispielsweise die Konzentrationen an Wasser und CO gering (hinsichtlich Wasser bevorzugt so gering, dass nur die oben genannten erfindungsgemäß besonders bevorzugt einzusetzenden Moläquivalente Wasser im Reaktionsraum zugegen sind), die CO₂-Konzentration hoch und die Temperatur oberhalb von 350 °C gehalten werden. Die CO-Shift-Reaktion führt dann zur Abreaktion von gegebenenfalls im Reaktionsraum entstehenden H₂, wodurch die Weiterreaktion des Acroleins zu Propen unterbunden wird.

Kohlendioxid und Wasserdampf werden üblicherweise bei Temperaturen oberhalb 800 °C (H₂O) beziehungsweise bei etwa 900 °C (CO₂) als Aktivierungsmittel bei der Aktivkohleherstellung eingesetzt, wo sie Kohlenstoff aus der Matrix (also dem fest untereinander verbundenen Kohlenstoffgerüst) des Aktivkohlevorproduktes nach H₂O+C -> CO+ H₂; 2 H₂O+C -> CO₂ + 2H₂, beziehungsweise CO₂ +C -> 2 CO oxidieren. (siehe Hartmut von Kienle, Erich Bäder, Aktivkohle und ihre industrielle Anwendung, Enke-Verlag, 1980). Typische Reaktionszeiten liegen hier im Bereich einiger Stunden. Das erfindungsgemäße Verfahren zielt jedoch auf wesentlich längere Standzeiten der Aktivkohlekatalysatoren ab. Bei Reaktionszeiten von Tagen, Wochen oder Monaten können die genannten Reaktionen auch bei Temperaturen deutlich unterhalb der angegebenen 800 °C zu merklichen Reaktionsumsätzen führen.

Erfindungsgemäß kann die kontrollierte Kohlenstoffoxidation mit Wasser und/oder CO₂ aber auch gezielt genutzt werden, um einer Katalysatoralterung entgegenzuwirken. In den Reaktionsraum eingebrachte kohlenstoffhaltige Verunreinigungen (sowie in Nebenreaktionen auch Fette und Fettbestandteile) werden teilweise verkokt, also unter Bildung gasförmiger Bestandteile zu elementarem Kohlenstoff umgesetzt. Dieser lagert sich an den äußeren und inneren Katalysatoroberflächen an, verkleinert das Porenvolumen und führt zur Katalysatoralterung. Die Einstellung von Temperaturen und Konzentrationen (bevorzugt mindestens 5 Vol.-% Aktivierungsgase (CO₂, H₂O) in der Gasphase), bei denen diese Verkokung durch kontrollierte Abreaktion mit H₂O und CO₂ kompensiert wird, kann dieser Katalysatoralterung kontinuierlich entgegenwirken. Hierbei wird in gleichem Maße, wie Kohlenstoff abgelagert wird, Kohlenstoff durch Aktivierungsreaktionen aus dem Aktivkohlekörper in die Gasphase überführt, so dass die Porenstruktur des Katalysators langfristig aufrecht erhalten und eine lange Katalysatorstandzeit ermöglicht wird.
Alternativ kann das erfindungsgemäße Verfahren so durch geführt werden, dass sich Betriebsweisen mit niedriger Temperatur (z. B. zur Erlangung definierter Produktspektren) und mit hoher Temperatur - z.B. 750-900 °C (ggf. ohne Fett-/Ölkonversion, aber ggf. mit erhöhter Wasser- und/oder CO₂-Konzentration) abwechseln, um durch einen alternierenden Betrieb die Katalysatorstandzeit zu verlängern.

Soll auf beschriebene Abreaktion von Kohlenstoff verzichtet werden (etwa weil sich das Gleichgewicht aus Verkokung und Abreaktion nicht darstellen läßt), so kann bei Abwesenheit oder nur geringfügiger Anwesenheit von Wasser (wie nach dem Verfahren nach der DE 103 27 059 A1) die Abreaktion des Katalysators vermieden werden, indem als Inertgas ein anderer Stoff als CO₂ (vorteilhafterweise N₂) gewählt wird. Dies ergibt den größtmöglichen Freiraum im Bezug auf die Reaktionstemperatur, da auch bei hohen Temperaturen mangels Reaktionspartner keine Aktivierungsreaktionen stattfinden können.
Bei dem erfindungsgemäßen Verfahren ist dies nicht ohne weitere Einschränkungen möglich, da mit dem Wasser ja ein Aktivierungsgas zugegeben wird. Um dennoch einen Betrieb ohne merklichen Katalysatorabbrand zu erzeugen (oder um eine nur geringfügige Verkokung langfristig zu kompensieren), sind nun 2 Fahrweisen denkbar.
1.) Die Wassermenge wird sehr gering dosiert (so dass bei Reaktionsbedingungen im örtlichen Mittel maximal 10 Vol.-% Wasser im Reaktionsraum (Gasraum außerhalb der Aktivkohlepellets und ihres Porenvolumens) vorhanden sind) wobei weder CO₂ noch CO als Inertgas verwendet werden (vorzugsweise fungiert also N₂ als Inertgas). Hiermit können auch höhere Temperaturen ohne merklichen Aktivkohleabbrand eingestellt werden. Bevorzugt wird die Konvertierung dann bei 400 bis 800 °C, besonders bevorzugt bei 500 bis 600 °C, durchgeführt.
2.) Ist dagegen Wasser wird in merklichen Mengen (d.h. bezogen auf die zu konvertierenden Ausgangsmaterialien mehr als 2, bevorzugt mehr als 3 Moläquivalente Wasser) bei der Reaktion zugegen und/oder wird CO oder CO₂ oder ein CO und/oder CO₂ in merklichen Anteilen enthaltendes Gasgemisch als Inertgas verwendet, so wird eine niedrige Reaktionstemperatur gewählt. Bevorzugt wird Konvertierung dann bei 200 bis 550 °C, besonders bevorzugt bei 250 bis 450 °C, durchgeführt. Dies (d.h. die gegenüber dem Stand der Technik abgesenkten Konvertierungstemperaturen) erhöht zudem die Ausbeute an langkettigen Kohlenwasserstoffen, und ist daher als vorteilhaft anzusehen.
Liegen bei den beiden vorstehend beschriebenen Fahrweisen sehr geringe Verweilzeiten der Ausgangsmaterialien im Konversionsreaktor vor, so können auch jeweils höhere Wassermengen zugesetzt werden.

Die Verwendung von CO₂ als Inertgas hat den Vorteil, dass bei der Produktaufbereitung ein Trennschritt eingespart werden kann (CO₂ entsteht auch als Spaltprodukt und müsste bei der Rückführung von N₂ als Inertgas von diesem abgetrennt werden).

Der Produktgasstrom wird nach dem Durchlaufen des Katalysatorbettes bei Bedarf einer Gasaufbereitung zugeführt. Diese kann beispielsweise eine katalytische Hydrierstrecke umfassen, in der ungesättigte Kohlenwasserstoffe in Gegenwart von extern zugegebenem und/oder dem bei der Umsetzung entstandenen Wasserstoff (z.B. mit Platin/Aktivkohle oder Palladium/Aktivkohle als Katalysator) hydriert werden. Die Hydrierstrecke kann dem Konvertierungsreaktor nachgeschaltet oder im Konvertierungsreaktor hinter dem Bereich, in dem die Konvertierung erfolgt, d.h. die Aktivkohle enthalten ist, angeordnet sein. Alternativ ist es aber auch möglich, einen Teil der Aktivkohle mit einem geeigneten Hydrierungskatalysator zu imprägnieren oder einen solchen Hydrierungskatalysator unter die eingesetzte Aktivkohle zu mischen. Als Imprägnierung eignen sich gängige Katalysatoren wie Palladium oder Platin, die in bekannter Weise in Form von Lösungen auf die Aktivkohle oder auf ein anderes geeignetes Material aufgebracht werden.

Die gasförmigen Produkte werden mit oder ohne Gasaufbereitungs-Zwischenschritt einer Separiereinrichtung, beispielsweise einer Kühleinrichtung zugeführt, in der die (je nach Bedingung z.B. ab C₅, C₆ oder C₇) kondensierbaren Kohlenwasserstoffe von den leichtflüchtigen Produkten getrennt werden können. Letztere können erfasst werden und zur weiteren Beheizung des Katalysators dienen.
Die Produkttrennung kann bei Verwendung von CO₂ als Inertgas weiterhin vereinfacht werden, indem bei den Permanentgasen CO und CO₂ in einer Fraktion abgetrennt und einer nachfolgenden (beispielsweise katalytischen) Oxidationsstufe zugeführt werden, in welcher das CO zu CO₂ umgesetzt wird. Diese ist vorteilhafterweise so zu betreiben, dass Sauerstoff im Unterschuss zugegeben wird, um unter Inkaufnahme von nicht umgesetztem CO die Sauerstofffreiheit des rückzuführenden Inertgases sicherzustellen. Besonders vorteilhaft ist eine hierzu alternative Vorgehensweise: die Oxidation geschieht unter Abwesenheit von Sauerstoff an einem festen, flüssigen oder auf einer Trägersubstanz fixierten Oxidationsmittel, beispielsweise Kupfer(II)oxid (CuO) oder Vanadiumpentoxid (V₂O₅). Hierbei entsteht aus dem CO₂-CO-Gemisch entweder sauerstofffreies CO₂ oder ein sauerstofffreies CO₂-CO-Gemisch mit einem erhöhten Anteil an CO₂. Das bei dieser Reaktion reduzierte Oxidationsmittel kann beispielsweise an Luft oder Sauerstoff wieder in seine oxidierte Form überführt, auf diese Weise regeneriert und wieder in den Prozess eingesetzt werden. Als weitere Alternative (oder auch in Kombination mit den vorher beschriebenen Möglichkeiten) kann Sauerstoff auch nachträglich von CO₂ abgetrennt werden.
Durch die Zugabe von Wasser oder wasserabspaltenen Substanzen in den Reaktionsraum kann neben den beschriebenen Effekten auch eine erhöhte CO-Konzentration im Reaktorzustrom zugelassen werden. Das CO kann nämlich mit Wasser im Überschuss in der CO-Shift-Reaktion zu CO2 und Wasserstoff reagieren. Dies ermöglicht die Option einer erhöhten CO-Konzentration im rückgeführten Trägergasstrom, also geringerem Trennaufwand.
Figur 1 zeigt eine schematische Fließskizze (Grundfließbild) der oben erwähnten möglichen Verfahrensschritte.
Figur 2 zeigt ein Verfahrensfließbild unter Einschluss der entsprechenden Vorrichtungsbestandteile.

Die Ausbeute an kondensierbaren Kohlenwasserstoffen liegt im Bereich von etwa 50 Gew.-%, wie aus den obigen Erläuterungen ersichtlich, mit einer gewissen Schwankungsbreite in Abhängigkeit von der gewählten Temperatur und Aktivkohle. Je Tonne Fett ist daher mit etwa 500-650 I kondensierbaren Kohlenwasserstoffen zu. rechnen. Dabei handelt es sich vor allem um eine Fraktion im Bereich von C₆ bis C₂₀. Daraus können ggf. einzelne Fraktionen abgetrennt werden, beispielsweise durch Druckwechseladsorption oder dgl.. Für Brennstoffe ist insbesondere ein Kohlenwasserstoffschnitt von Interesse, der in seinem Siedebereich und seiner Zusammensetzung nach in etwa Kerosin (Siedebereich 175-325 °C entsprechend C₁₀ bis C₁₇) entspricht. Des Weiteren ist es möglich, die Produkte durch Rektifikation in ihre Komponenten zu zerlegen und diese im Chemiesektor zu nutzen. Kürzerkettige (C₆ bis C₉) Kohlenwasserstoffe können destillativ abgetrennt werden, kurzkettige Kohlenwasserstoffe können gegebenenfalls, zusammen mit dem entstandenen Wasserstoff und Kohlenmonoxid, wie oben erwähnt zur Beheizung des Reaktors thermisch genutzt werden. Damit wird die Beheizung des Reaktors in der Regel energieautark (die Boudoard-Reaktion (C + CO2 -> CO) spielt ab Temperaturen über 600 °C eine Rolle; es ist dann mit einem merklichem Umsatz und damit mit einem Verlust an Aktivkohle zu rechnen).

Die Verfahrensführung der vorliegenden Erfindung hat insbesondere folgende Vorteile: Die Konvertierung erfolgt kontinuierlich und in der Grundform des Verfahrens im einfachsten Fall einstufig; neben den kondensierbaren Kohlenwasserstoffen größerer Kettenlänge entstehen ebenfalls leichtflüchtige und auch Permanentgase wie Wasserstoffe bzw. Kohlenmonoxid, die energetisch genutzt werden können. Besonders vorteilhaft dabei ist es, dass diese auch zur Unterhaltung der notwendigen Reaktionstemperatur genutzt werden können.

Ohne Einschränkung der Allgemeinheit soll nachstehend die Erfindung anhand von Fließbildern und Ausführungsbeispielen näher erläutert werden.

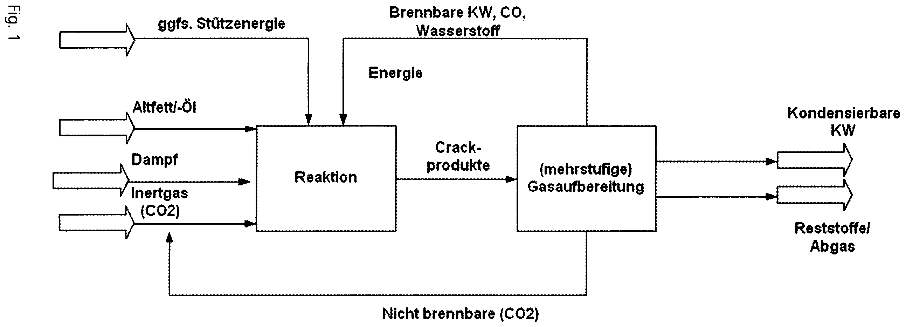

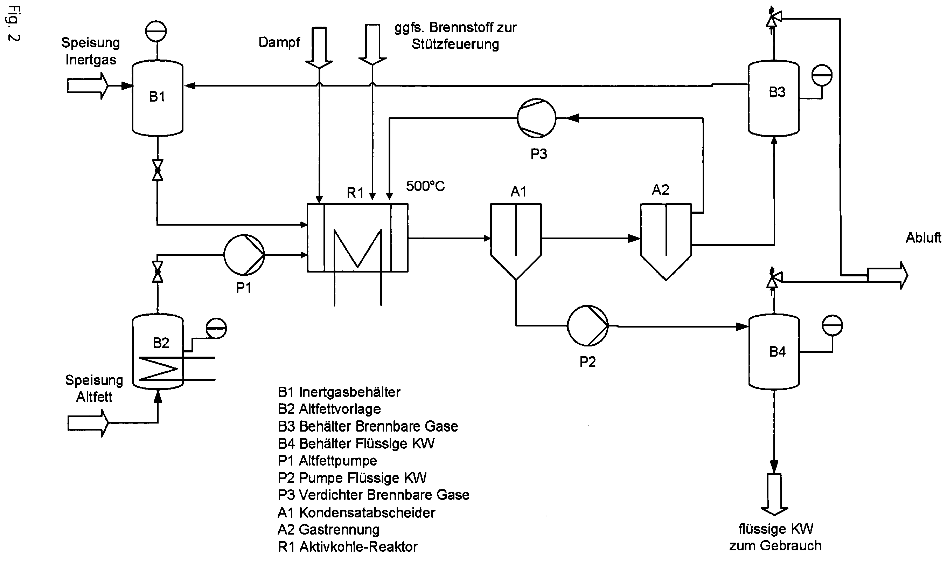

### Beispiel 1 - Erläuterung der Fließbilder in Figur 1 und 2

In einem Reaktor R1 in Form eines Festbettreaktors, der mit Aktivkohle bestückt ist, wird über einen Inertgasbehälter B1 Inertgas eingeleitet. Altfett gelangt über eine Altfettvorlage B2 und eine Altfettpumpe P1 in den Reaktor, wird dort soweit erhitzt, dass es verdampft, und sodann in einer auf eine geeignete Temperatur (bei SC44 beispielsweise über 400 °C vorzugsweise 520 - 550 °C) gebrachten Reaktionszone durch das Aktivkohle-Bett des Reaktors geleitet. Gleichzeitig wird ein Dampfstrom in den Produktaufgabebereich des Reaktors geleitet. Der Produktgasstrom wird mit vorhandenem Inertgas in einen Kondensatabscheider Al geführt, in dem die weniger flüchtigen Kohlenwasserstoffe (je nach Einstellung z.B. ab C₄, C₅, C₆ oder C₇) durch Kondensation abgetrennt werden. Diese können sodann in einem Behälter B4 aufgefangen und, je nach Bedarf, ihrer weiteren Bearbeitung (Aufreinigung, Fraktionierung) oder Verwertung zugeführt werden. Die flüchtigen Kohlenwasserstoffe werden zusammen mit den Permanentgasen (H₂, CO, CO₂) einer Gastrennung A2 zugeführt, wo sie von Inertgasen getrennt werden. Über einen Verdichter P3 können sie, ggf. zusammen mit den brennbaren Permanentgasen, in den Reaktor R1 zurückgeführt werden, um dort durch Verbrennung den Energieeintrag zu unterstützen oder autonom zu unterhalten. Der Reaktor kann aber natürlich auch durch externe Beheizung oder die Zufuhr von externem Brenngas auf Betriebstemperatur gehalten werden; in einer Anfangsphase ist eine externe Aufheizung unumgänglich. In der Gastrennung A2 kann auch entstandenes Kohlendioxid abgetrennt und zur Inertisierung direkt in den Reaktor oder aber in die Inertgaszufuhr-Leitung eingespeist werden. Die in der Gastrennung gewonnenen, leichtflüchtigen brennbaren Gase können statt in den Kreislauf rückgeführt zu werden auch in einem Behälter B3 gesammelt und einer externen Verwertung zugeführt werden.

Als Alternativausführung kann dieses Beispiel insofern abgeändert werden, dass nach dem Reaktor im Zuge der Produkttrennung auch nicht umgesetzte Einsatzstoffe abgetrennt und nach Ausschleusen eines Reststoffstroms dem Feedstrom zugeschlagen werden.

### Beispiel 2

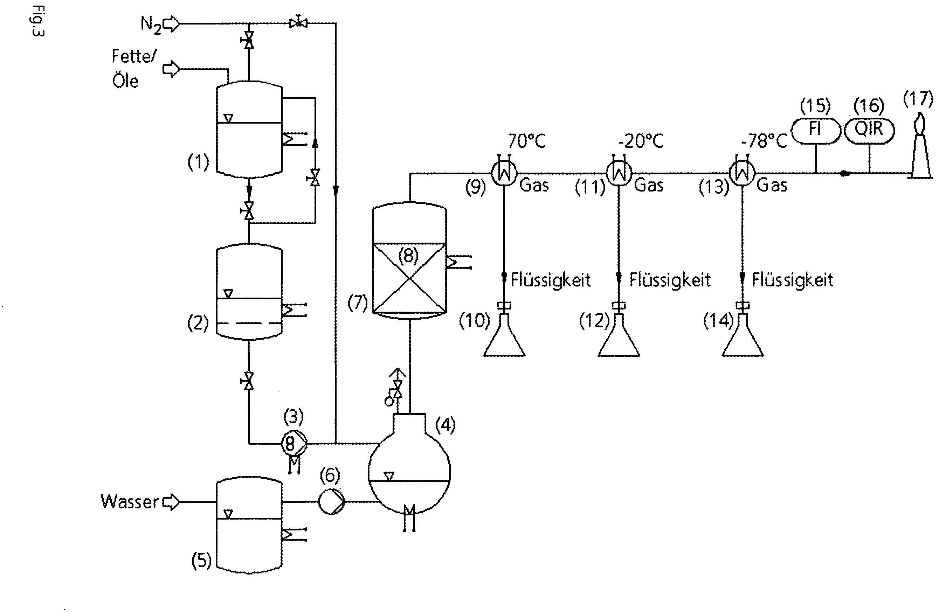

Es wurde Versuchsanlage gemäß dem in Abb. 3 dargestellten Fließbild verwendet.

Falls notwendig (z.B. bei Altfetten) wird vorab der Einsatzstoff von groben Feststoffen befreit.
Anschließend wird der Feststoff im Vorlagebehälter (1) vorgelegt und bis zur Dünnflüssigkeit erwärmt. Der nun flüssige Einsatzstoff wird im beheizten Feinfilterapparat (2) durch eine Fritte mit der Porenweite G2 von Feinpartikeln befreit und durch die ebenfalls beheizte Dosierpumpe (3) dem elektrisch beheizten Verdampfer (4) zugeführt. Soll Wasser zugesetzt werden, so wird dieses aus dem Vorratsbehälter (5) über die Dosierpumpe (6) ebenfalls direkt in den Verdampfer (4) geleitet.
Im Verdampfer (4) werden Einsatzstoffe und Wasser gemeinsam bei einer Sumpftemperatur von ca. 340 °C verdampft und dem Reaktor (7) zugeleitet. Dort werden sie in einer Festbett-Aktivkohleschüttung (8) bei 500 °C katalytisch-pyrolytisch umgesetzt. Als Aktivkohleschüttung wurden 150 g einer kokosschalenstämmigen Kornaktivkohle (spezifische Oberfläche nach BET ca. 1 100 m²/g) eingesetzt. Die dampfförmigen Produkte werden ein einer dreistufigen Kühlkaskade (9, 11, 13) bei 0 °C, -20 °C und -78 °C fraktioniert auskondensiert und die jeweiligen flüssigen Produkte in Behältern (10, 12, 14) aufgefangen. Der verbleibende Gasstrom durchläuft eine Volumenstromerfassung (15), wird anschließend zur Analyse mit einem Online-Gaschromatographen (16) kontinuierlich beprobt und schließlich einer Thermischen Nachverbrennung (17) zugeführt.

Für die Versuche wird teilweise durchgehärtetes Kokosöl ("Palmin" der Firma Peter Kölln KGaA, D-25336 Elmshorn) mit einem Wassergehalt von 0,056 % (Genauigkeit +-10%rel.) eingesetzt. Mit der vereinfachenden Annahme einer vollständigen Durchhärtung und der Abwesenheit freier Fettsäuren ergibt sich eine Triglycerid-Molmasse von 676 g/mol. "1 Moläquivalent" Wasser (Molmasse: 18 g/mol) entspricht damit einer Wasserzugabe von 2,7 Gew.-%, bezogen auf die Fettmasse.

Als Alternative zur Wasserzugabe wird die Zugabe von Glycerin als wasserabspaltende Substanz untersucht. Hier wird davon ausgegangen, dass das zugesetzte Glycerin nicht nur zum Acrolein, sondern bis zum Propen durchreagiert und somit je Mol Glycerin nur 1 Mol Wasser freigesetzt wird. "1 Moläquivalent" Glycerin (Molmasse: 92,1 g/mol) entspricht damit einer Glycerinzugabe von 13,6 Gew.-%, bezogen auf die Fettmasse.

Erläuternde Bruttoreaktion: C₃H₈O₃ + 2 C* ⇔ C₃H₆ + 2 CO + H₂O (als Kohlenstoffquelle C* dient entweder die Aktivkohle oder Zersetzungsprodukte aus Nebenreaktionen der Fettsäuredecarboxylierung)

### Beispiel 2a - Referenzversuch

Als Referenzversuch wird das Kokosfett ohne Wasser- oder Glycerinzugabe umgesetzt. Es werden 1,020 ml/min Fett umgesetzt.

### Beispiel 2b - Wasserzugabe

Bei einem Kokosfettdurchsatz von 1,020 ml/min wird über die Dosierpumpe 92 mg/min Wasser zugesetzt. Dies entspricht einem Zusatz von 3,5 Moläquivalenten. Unter Berücksichtigung der zugeführten Inertgasmenge kann die (im örtlichen Mittel) vorliegende Wasserkonzentration bestimmt werden. Es werden 2 Versuchsreihen durchgeführt. Hierbei beträgt der Wasserkonzentration 3,5-4 Vol.-% bzw. maximal 9 Vol.-%.

Durch die Wasserzugabe konnte in beiden Fällen die Ausbeute an kurzkettigen C1-C3 Molekülen gegenüber dem Referenzversuch um den Faktor 1,5 gesteigert werden.

In Kokosöl beträgt das Massenverhältnis von C12- zu C18-Fettsäuren 3,1:1, decarboxyliert gerechnet 2,8:1.
Ohne Wasserzugabe ergab sich ein Massenverhältnis der gewonnenen C11-Alkane zu den C17-Alkanen von 6,9:1. Dies bedeutet, dass die kleineren C11-Alkane nicht nur durch einfache Decarboxylierung der C12-Fettsäure, sondern auch durch Spaltungsreaktionen längerkettiger Pimärprodukte entstanden sind.
Durch die Wasserzugabe sank dieses Verhältnis auf 1,6:1, also noch unter das decarboxyliert gerechnete Masseverhältnis der entsprechenden Fettsäuren zueinander. Dies bedeutet, dass die Abbaureaktionen der langkettigen Primärprodukte (Alkane) durch die Wasserzugabe gegenüber sonstigen Reaktionen gehemmt werden. Die Wasserzugabe fördert also ein Produktspektrum, das der Erzeugung von Dieselkraftstoff entgegenkommt, und hemmt dessen Zersetzung zu kleineren Bausteinen.

### Beispiel 2c -Glycerinzugabe

Dem Kokosfett wurden pro Gramm Fett 0,554g Glycerin zugesetzt und bei 70°C durch Rühren in einer Mikroemulsion gehalten. Die 70°C warme gerührte Emulsion wird mit 1 ml/min dem Reaktor zugeführt. Dies entspricht einem Zusatz von 4,0 Moläquivalenten. Eine zusätzliche Wasserzugabe erfolgt nicht.

Die Glycerinzugabe führte zu einer Ausbeutesteigerung der Benzininhaltsstoffe (Alkane mit der Kettenlänge C5-C8) gegenüber dem Referenzversuch um den Faktor 1,6 und der Dieselinhaltsstoffe (Alkane mit der Kettenlänge C11-C20) um den Faktor 1,3. Es waren 82 Masse-% Dieselinhaltsstoffe und 14 Masse-% Benzininhaltsstoffe enthalten.

## Patentansprüche

1. Verfahren zum Konvertieren eines fettsäure- und/oder fett- und/oder ölhaltigen Ausgangsmaterials in ein kohlenwasserstoffhaltiges Produktgemisch, umfassend folgende Schritte:
- Kontaktieren des fettsäure- und/oder fett- und/oder ölhaltigen Ausgangsmaterials in Abwesenheit von Sauerstoff bei einer Temperatur von 150-850°C in einem Konvertierungsreaktor, der Aktivkohle enthält, so dass ein kohlenwasserstoffhaltiges Produktgasgemisch entsteht,
- Auffangen des kohlenwasserstoffhaltigen Produktgasstroms,
**dadurch gekennzeichnet, dass**
das Konvertierungsverfahren kontinuierlich oder teilkontinuierlich betrieben wird und die Kontaktierung des Ausgangsmaterial mit der Aktivkohle in Gegenwart von Wasser und/oder einem Wasser freisetzenden Material erfolgt,
wobei bezogen auf das Ausgangsmaterial mindestens 2 Moläquivalente Wasser oder freisetzbares Wasser zugegen sind.

2. Verfahren nach einem der vorhergehenden Ansprüche,
**dadurch gekennzeichnet, dass**
das Ausgangsmaterial im Konvertierungsreaktor gas- oder dampfförmig mit der Aktivkohle in Kontakt gebracht wird.

3. Verfahren nach einem der vorhergehenden Ansprüche,
**dadurch gekennzeichnet, dass**
im örtlichen und zeitlichen Mittel maximal 10 Vol.-% Wasser im Reaktionsraum vorhanden sind und das Ausgangsmaterial im Konvertierungsreaktor bei 400 °C bis 800 °C mit der Aktivkohle in Kontakt gebracht wird.

4. Verfahren nach einem der vorhergehenden Ansprüche,
**dadurch gekennzeichnet, dass**
im örtlichen und zeitlichen Mittel mehr als 7 Vol.-% Wasser im Reaktionsraum bei der Kontaktierung zugegen sind und das Ausgangsmaterial im Konvertierungsreaktor bei 200 °C bis 550 °C mit der Aktivkohle in Kontakt gebracht wird.

5. Verfahren nach einem der vorhergehenden Ansprüche,
**dadurch gekennzeichnet, dass**
das eingesetzte Wasser und/oder das Wasser freisetzende Material dem Inertgasstrom zugesetzt wird und/oder dem Ausgangsmaterial zugesetzt wird und/oder in den Konvertierungsreaktor eingeleitet wird und/oder, dass das Wasser freisetzende Material im Ausgangsmaterial enthalten ist..

6. Verfahren nach einem der vorhergehenden Ansprüche,
**dadurch gekennzeichnet, dass**
das eingesetzte Wasser in Form eines wasserhaltigen Gemischs, insbesondere ein Wasser und Glycerin enthaltendes Gemisch, und/oder reinen Wassers zugesetzt wird und/oder im Ausgangsmaterial enthalten ist.

7. Verfahren nach Anspruch 1 oder 5,
**dadurch gekennzeichnet, dass**
als Wasser freisetzendes Material Glycerin oder ein glycerinhaltiges Gemisch eingesetzt wird.

8. Verfahren nach einem der vorhergehenden Ansprüche,
**dadurch gekennzeichnet, dass**
die Kontaktierung des Ausgangsmaterial mit der Aktivkohle in Gegenwart einer basischen Komponente erfolgt.

9. Verfahren nach einem der vorhergehenden Ansprüche,
**dadurch gekennzeichnet, dass**
der Konvertierungsreaktor ein Reaktor mit stationärer oder zirkulierender Wirbelschicht, ein Drehrostgenerator, ein Schachtofen, ein Etagenofen oder ein Drehrohrreaktoren ist und/oder ein Festbett und/oder ein Wanderbett enthält.

10. Verfahren nach einem der vorhergehenden Ansprüche,
**dadurch gekennzeichnet, dass**
das Ausgangsmaterial in einem Inertgasstrom durch den Aktivkohle enthaltenden Konvertierungsreaktor geführt wird.

11. Verfahren nach einem der vorhergehenden Ansprüche,
**dadurch gekennzeichnet, dass**
die Aktivkohle ausgewählt ist unter einer oder mehreren mittels Wasserdampf, Kohlendioxid oder einem Wasserdampf- Kohlendioxidgemisch aktivierten Aktivkohlen.

12. Verfahren nach einem der vorhergehenden Ansprüche,
**dadurch gekennzeichnet, dass**
die Konvertierung bei einem Druck zwischen 0,2 und 2,0 bar abs. erfolgt.

13. Verfahren nach einem der vorhergehenden Ansprüche,
**dadurch gekennzeichnet, dass**
der Produktgasstrom nach dem Durchlaufen des Aktivkohle enthaltenden Konvertierungsreaktor einer Gasaufbereitung zugeführt wird, bei der ungesättigte Kohlenwasserstoffe des Produktgasstroms katalytisch hydriert werden und/oder der gegebenenfalls hydrierte Produktgasstrom einer Separiereinrichtung zugeführt wird, in der eine Produktauftrennung erfolgt.

14. Verfahren nach einem der vorhergehenden Ansprüche,
**dadurch gekennzeichnet, dass**
nicht oder nicht vollständig umgesetzte Einsatzstoffe vom Produktstrom abgetrennt und ganz oder teilweise als Einsatzstoff wieder dem Reaktor zugeleitet werden.

15. Verfahren nach einem der vorhergehenden Ansprüche,
**dadurch gekennzeichnet, dass**
im Produktgasstrom oder einem Teilstrom hiervon enthaltenes CO unter Abwesenheit von Sauerstoff an einem festen und/oder flüssigen und/oder auf einer Trägersubstanz fixierten Oxidationsmittel, zumindest teilweise zu sauerstofffreiem CO₂ oxidiert wird.

## Claims

1. Method for converting a fatty acid-containing and/or fat-containing and/or oil-containing starting material into a hydrocarbon-containing product mixture comprising the following steps:
- contacting the fatty acid-containing and/or fat-containing and/or oil-containing starting material in the absence of oxygen at a temperature of 150-850°C in a conversion reactor containing activated carbon to produce a hydrocarbon-containing product gas mixture,
- capturing the hydrocarbon-containing product gas flow,
**characterized in that**
the conversion method is operated continuously or semi-continuously, and the starting material is contacted with the activated carbon in the presence of water and/or a material that releases water,
wherein at least 2 molar equivalents water or releasable water are present related to the starting material.

2. Method according to one of the preceding claims,
**characterized in that**
the starting material in the conversion reactor is brought into contact in the form of a gas or vapour with the activated carbon.

3. Method according to one of the preceding claims,
**characterized in that**
a maximum of 10% by volume of water is in the reaction chamber on average in terms of location and time, and the starting material in the conversion reactor is brought into contact with the activated carbon at 400°C to 800°C.

4. Method according to one of the preceding claims,
**characterized in that**
more than 7% by volume of water is present in the reaction chamber during contacting on average in terms of location and time, and the starting material in the conversion reactor is brought into contact with the activated carbon at 200°C to 550°C.

5. Method according to one of the preceding claims,
**characterized in that**
the water used and/or the water-releasing material is added to the inert gas flow, and/or added to the starting material, and/or introduced into the conversion reactor, and/or **in that** the water-releasing material is contained in the starting material.

6. Method according to one of the preceding claims,
**characterized in that**
the water used is added and/or is contained in the starting material in the form of a water-containing mixture, in particular a water and glycerin containing mixture, and/or in the form of pure water.

7. Method according to Claim 1 or 5,
**characterized in that**
the water-releasing material used is glycerin or a glycerin-containing mixture.

8. Method according to one of the preceding claims,
**characterized in that**
the starting material is brought into contact with the activated carbon in the presence of a basic component.

9. Method according to one of the preceding claims,
**characterized in that**
the conversion reactor is a reactor with a stationary or circulating fluidized bed, a rotary grate generator, a shaft furnace, a multi-deck oven or a rotating tubular reactor, and/or contains a fixed bed or a moving bed.

10. Method according to one of the preceding claims,
**characterized in that**
the starting material is conducted in an inert gas flow through the activated carbon containing conversion reactor.

11. Method according to one of the preceding claims,
**characterized in that**
the activated carbon is selected from one or more activated carbons activated with steam, carbon dioxide or a steam/carbon dioxide mixture.

12. Method according to one of the preceding claims,
**characterized in that**
the conversion occurs at an absolute pressure between 0.2 and 2.0 bar.

13. Method according to one of the preceding claims,
**characterized in that**
after passing through the activated carbon containing conversion reactor, the product gas flow is fed to a gas preparation in which the unsaturated hydrocarbons of the product gas flow are catalytically hydrated, and/or the possibly hydrated product gas flow is fed to a separating device in which the product is separated.

14. Method according to one of the preceding claims,
**characterized in that**
unreacted or incompletely reacted input materials are removed from the product flow and are entirely or partially re-fed into the reactor as input material.

15. Method according to one of the preceding claims,
**characterized in that**
CO contained in the product gas flow or a partial flow thereof is oxidized at least partially into oxygen-free CO₂ in the absence of oxygen on an oxidizing agent that is solid and/or liquid and/or fixed on a carrier substance.

## Revendications

1. Procédé de conversion d'un matériau de départ contenant des acides gras et/ou des graisses et/ou des huiles en un mélange de produits contenant des hydrocarbures, comprenant les étapes suivantes :
- la mise en contact du matériau de départ contenant des acides gras et/ou des graisses et/ou des huiles en l'absence d'oxygène à une température de 150 à 850 °C dans un réacteur de conversion qui contient du charbon actif de manière à former un mélange gazeux de produits contenant des hydrocarbures,
- la collection du courant gazeux de produits contenant des hydrocarbures,
**caractérisé en ce que**
le procédé de conversion est exploité de manière continue ou partiellement continue et la mise en contact du matériau de départ avec le charbon actif a lieu en présence d'eau et/ou d'un matériau libérant de l'eau,
au moins 2 équivalents molaires d'eau ou d'eau libérable étant présente par rapport au matériau de départ.

2. Procédé selon l'une quelconque des revendications précédentes, **caractérisé en ce que** le matériau de départ est mis en contact avec le charbon actif sous forme gazeuse ou vapeur dans le réacteur de conversion.

3. Procédé selon l'une quelconque des revendications précédentes, **caractérisé en ce qu'**en moyenne dans l'espace et dans le temps, au plus 10 % en volume d'eau est présente dans la chambre de réaction, et le matériau de départ est mis en contact avec le charbon actif dans le réacteur de conversion à une température de 400 °C à 800 °C.

4. Procédé selon l'une quelconque des revendications précédentes, **caractérisé en ce qu'**en moyenne dans l'espace et dans le temps, plus de 7 % en volume d'eau est présente dans la chambre de réaction lors de la mise en contact, et le matériau de départ est mis en contact avec le charbon actif dans le réacteur de conversion à une température de 200 °C à 550 °C.

5. Procédé selon l'une quelconque des revendications précédentes, **caractérisé en ce que** l'eau utilisée et/ou le matériau libérant de l'eau est ajouté au courant de gaz inerte et/ou est ajouté au matériau de départ et/ou est introduit dans le réacteur de conversion et/ou **en ce que** le matériau libérant de l'eau est contenu dans le matériau de départ.

6. Procédé selon l'une quelconque des revendications précédentes, **caractérisé en ce que** l'eau utilisée est ajoutée et/ou est contenue dans le matériau de départ sous la forme d'un mélange contenant de l'eau, notamment d'un mélange contenant de l'eau et de la glycérine, et/ou d'eau pure.

7. Procédé selon la revendication 1 ou 5, **caractérisé en ce que** de la glycérine ou un mélange contenant de la glycérine est utilisé en tant que matériau libérant de l'eau.

8. Procédé selon l'une quelconque des revendications précédentes, **caractérisé en ce que** la mise en contact du matériau de départ avec le charbon actif a lieu en présence d'un composant basique.

9. Procédé selon l'une quelconque des revendications précédentes, **caractérisé en ce que** le réacteur de conversion est un réacteur à lit fluidisé stationnaire ou en circulation, un générateur à grille tournante, un four vertical, un four à étages ou un réacteur tubulaire rotatif, et/ou contient un lit fixe et/ou un lit mobile.

10. Procédé selon l'une quelconque des revendications précédentes, **caractérisé en ce que** le matériau de départ est acheminé dans un courant de gaz inerte au travers du réacteur de conversion contenant le charbon actif.

11. Procédé selon l'une quelconque des revendications précédentes, **caractérisé en ce que** le charbon actif est choisi parmi un ou plusieurs charbons actifs activés au moyen de vapeur d'eau, de dioxyde de carbone ou d'un mélange de vapeur d'eau et de dioxyde de carbone.

12. Procédé selon l'une quelconque des revendications précédentes, **caractérisé en ce que** la conversion a lieu à une pression comprise entre 0,2 et 2,0 bar abs.

13. Procédé selon l'une quelconque des revendications précédentes, **caractérisé en ce que** le courant gazeux de produits est introduit dans un conditionnement du gaz après la traversée du réacteur de conversion contenant du charbon actif, dans lequel les hydrocarbures insaturés du courant gazeux de produits sont hydrogénés catalytiquement et/ou le courant gazeux de produits éventuellement hydrogénés est introduit dans un dispositif de séparation dans lequel une séparation des produits a lieu.

14. Procédé selon l'une quelconque des revendications précédentes, **caractérisé en ce que** des matières premières non ou non complètement réagies sont séparées du courant de produits et réintroduites dans le réacteur en totalité ou en partie en tant que matières premières.

15. Procédé selon l'une quelconque des revendications précédentes, **caractérisé en ce que** le CO contenu dans le courant gazeux de produits ou un courant partiel de celui-ci est au moins partiellement oxydé en CO₂ exempt d'oxygène en l'absence d'oxygène sur un oxydant solide et/ou liquide et/ou fixé sur une substance support.
